Europäisches Patentamt

European Patent Office

Office européen des brevets

(11) Veröffentlichungsnummer: **0 096 399**
**A2**

(12) **EUROPÄISCHE PATENTANMELDUNG**

(21) Anmeldenummer: 83105525.6

(22) Anmeldetag: 04.06.83

(51) Int. Cl.³: **B 60 B 3/06**

(30) Priorität: 04.06.82 DE 8216339 U

(43) Veröffentlichungstag der Anmeldung:
21.12.83 Patentblatt 83/51

(84) Benannte Vertragsstaaten:
AT BE CH DE FR GB IT LI LU NL SE

(71) Anmelder: Stahlschmidt & Maiworm GmbH & Co.KG
In der Lacke
D-5980 Werdohl 1(DE)

(72) Erfinder: Stahlschmidt, Erich
Wiesenfeld 10
D-5974 Herscheid(DE)

(74) Vertreter: Seibert, Rudolf, Dipl.-Ing.
Tattenbachstrasse 9
D-8000 München 22(DE)

(54) Fahrzeugfelge aus Leichtmetall.

(57) Die Erfindung bezieht sich auf eine Fahrzeugfelge aus Leichtmetall. Zur Schaffung eines großen Freiraumes soll der Felgenteller (2) nahe des äußeren Felgenhornes am Felgenring (1) angeordnet sein. Die Felge ist - da sich eine derartige Form nicht gießen läßt - zweiteilig aufgebaut und Felgenring und Felgenteller werden in an sich bekannter Weise durch Aufschrumpfen miteinander verbunden. Um dabei bei dem neuartigen Aufbau eine gute und sichere Verbindung zwischen beiden Teilen bei ausreichender Festigkeit zu erreichen, ist erfindungsgemäß der Felgenring (1) im Bereich des äußeren Felgenhorns (3) mit einer sich nach innen kegelförmig geringfügig erweiternden Ringfläche (4) versehen zur Aufnahme des mit einer entsprechend konisch geformten Stirnfläche (5) versehenen Felgentellers (2). Zuzüglich können Schweiß- und/oder Schraubverbindungen vorgesehen werden.

FIG. 1

Fahrzeugfelge aus Leichtmetall

Die vorliegende Erfindung bezieht sich auf eine Fahrzeugfelge aus einem Material geringen Gewichtes, insbesondere Leichtmetall, wie Aluminium. Es ist bekannt, derartige Felgen zweiteilig aufzubauen, und zwar aus einem vorzugsweise aus einem Rohrabschnitt gezogenen Felgenring, in welchem der Felgenteller, der selbst gegossen, geschmiedet oder in anderer Wiese erstellt sein kann, eingesetzt ist. Dabei ist im besonderen bekannt geworden, um eine Schweißverbindung zwischen Felgenteller und Felgenring, die diesen schwächen könnte, zu vermeiden, den Felgenring auf den Felgenteller im Pressitz, also beispielsweise durch Aufschrumpfen einzusetzen. Es hat sich gezeigt, daß eine derartige Verbindung, die im Gegensatz zu einer Schweißverbindung keinerlei Materialveränderungen im Berührungsbereich auslöst, den praktischen Bedürfnissen voll gerecht wird, wenn auf der Innenseite des Felgenringes entsprechende Hinterschneidungen angeordnet werden, die in der Lage sind, auch die achsparallelen Kräfte aufzunehmen.

Bei derartigen Fahrzeugfelgen wird bislang der Felgenteller im mittleren Bereich des Felgenringes eingesetzt, da man der Überzeugung war, daß nur auf diese Weise eine gleichmäßige Verteilung der am Felgenring angreifenden Kräfte, die auf die Radachse übertragen werden müssen, möglich ist.

Ein derartiger Aufbau der dabei im wesentlichen der Form eines einstückig gegossenen Rades entspricht, führt notwendigerweise dazu, daß bei gleicher Ausgestaltung von Radachse und insbesondere den auf der Radachse anzubringenden Funktionsteilen, wie Bremse usw., die Gesamtbreite eines Fahrzeuges durch das entsprechend weit vorstehende Rad vergrößert wird.

Es besteht aber, insbesondere auch für große Fahrzeuge, wie LKW's oder Omnibusse, Bedarf an einer Fahrzeugfelge, bei der der Felgenteller (Radschüssel) möglichst weit nach außen, also in den Bereich des äußeren Felgenhornes zu liegen kommt. Ein derartiger Aufbau konnte bislang in einer für große Stückzahlen geeigneten Weise, insbesondere auch nicht als Gußrad realisiert werden.

Aufgabe der Erfindung ist es, eine Fahrzeugfelge anzugeben, bei welcher unter Anwendung des an sich bekannten Aufschrumpfens der Radteller so weit nach außen gezogen wird, daß auf der Innenseite gut alle Funktionsteile mit ausreichendem Abstand untereinander und von dem Radteller untergebracht werden können, ohne daß das Rad selbst wesentlich nach außen vorsteht. Dabei sollen die einzelnen Teile, also Felgenring und Felgenteller in herkömmlicher Weise durch Tiefziehen und/oder Gießen herstellbar sein.

Diese Aufgabe wird mit einer Fahrzeugfelge mit den Merkmalen des Patentanspruches 1 gelöst.

Bei einer Fahrzeugfelge nach der vorliegenden Erfindung wird also der Felgenteller (Radteller) ganz nach außen gezogen, wobei, um im Betrieb auch die Radialkräfte vom Felgenring auf die Radnabe einwandfrei übertragen zu können und einen einwandfreien Sitz des Felgentellers innerhalb des Felgenringes zu garantieren, entweder auf der Innenseite eine sich nach innen kegelförmig geringfügig erweiternde Ringfläche oder aber im Bereich des Felgenhornes eine Hinterschneidung vorgesehen ist.

Bei der Herstellung einer derartigen Fahrzeugfelge kann dann beispielsweise durch Aufschrumpfen der Felgenteller von vorne in den Felgenring dadurch eingesetzt werden, daß dieser auf eine Temperatur, die etwa 300° Grad oberhalb der Eigentemperatur des Felgentellers liegt, erhitzt wird. Sobald die beiden Teile eine gleiche Temperatur angenommen haben, ist ein absolut einwandfreier Sitz des Radtellers im Felgenring garantiert.

Dabei kann es sich gemäß einer Weiterbildung des Erfindungsgedankens bei Fahrzeugfelgen, die sehr großen Drehkräften ausgesetzt sind, bei denen also große Beschleunigungs- oder Bremskräfte von dem Felgenring auf die Achse übertragen werden müssen, als vorteilhaft erweisen, im Berührungsbereich zwischen Felgenteller und Felgenring ein die Reibung zwischen beiden Teilen erhöhendes Material, wie beispielsweise Korundsand oder dgl., einzubringen, um jeglichen Schlupf zwischen beiden Teilen sicher auszuschließen. Die gleiche Maßnahme kann gemäß einer anderen vorteilhaften Weiterbildung durch Anbringung von auf dem Umfang entsprechend verteilter Unebenheiten, Verzahnungen usw. erreicht werden.

Gemäß einer anderen vorteilhaften Weiterbildung des Erfindungsgedankens wird zusätzlich zu dem Preßsitz vorgeschlagen, die beiden Teile zur weiteren Sicherung auch gegen gegenseitiges Verdrehen, zumindest stellenweise zu verschweißen und/oder zu verschrauben.

Gemäß einer anderen vorteilhaften Realisierungsmöglichkeit wird am Felgenring eine Ringtasche gebildet, in die der Felgenteller mit seinem äußeren Rand eingebracht wird. Der Rand der Ringtasche wird dann umgebördelt, so daß ein absolut fester Formschluß gegeben ist.

Die vorgenannten Maßnahmen führen auch dazu, daß entsprechend größere achsparallele Kräfte aufgenommen werden können, wobei zusätzlich, wie noch erläutert wird, auch Verzahnungen vorgesehen werden können, die sich über den Umfang in Form von Ringnuten, Rillen usw. erstrekken.

Einzelheiten einer Fahrzeugfelge mit den Merkmalen nach der Erfindung werden im folgenden anhand der anliegenden Zeichnung erläutert.

In der Zeichnung zeigen:

Fig. 1      eine Schnittdarstellung durch eine Fahrzeugfelge mit den Merkmalen der Erfindung,

Fig. 2      eine Teilschnittdarstellung des Verbindungsbereiches zwischen Felgenring und Felgenteller,

Fig. 3      eine abgewandelte Ausführungsform im Verbindungsbereich und

Fign. 4 bis 6  verschiedene Maßnahmen zur zusätzlichen Sicherung der Verbindung zwischen Felgenring und Felgenteller.

Im einzelnen ist in den Figuren mit 1 der Felgenring bezeichnet, in den der Felgenteller 4 gemäß der Erfindung im äußeren Bereich, also möglichst nahe an dem Felgenhorn 3, eingesetzt werden soll. Zur einwandfreien Kraftübertragung von Felgenring 1 auf den Felgenteller 2 besitzt der Felgenteller 2 eine sich konisch nach innen erweiternde Außenringfläche 5, auf die der Felgenring 1 mit seiner sich nach innen leicht erweiternden konischen Fläche 4 beispielsweise nach entsprechendem Erhitzen des Felgenringes 1 im Preßsitz aufgeschrumpft wird.

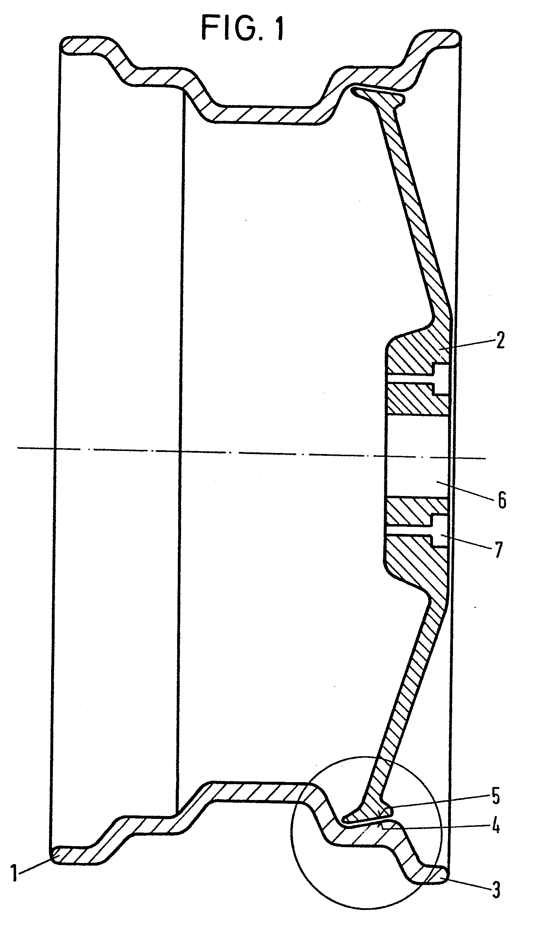

In der Fig. 1 sind mit 6 die Öffnung für die Radnabe und mit 7 die Durchbrechungen für die Befestigungsschrauben bezeichnet.

Aus der Fig. 1 ist unmittelbar zu ersehen, daß durch die vorgenannte Anordnung der gesamte Innenraum der Radfelge frei ist, so daß für die auf der Fahrzeugachse angeordneten Funktionsteile, wie Bremsen, Haltetrommeln usw. ausreichend Platz vorhanden ist und das Rad praktisch kaum über diese Teile vorsteht. Trotzdem werden alle im Betrieb vom Felgenring aufzunehmende Kräfte einwandfrei auf die Radachse und damit das Fahrzeug übertragen, ohne daß es zu irgendwelchen störenden Verformungen käme. Dieses Ergebnis war für den Fachmann absolut überraschend.

Felgenring und Felgenteller können dabei aus beliebigem Material bestehen. Im besonderen empfiehlt es sich dabei den Felgenring aus Aluminium, beispielsweise aus einem Rohrabschnitt durch Tiefziehen, herzustellen. Es ist aber im Rahmen der Erfindung auch durchaus möglich, den Felgenring in einem eigenen Gießverfahren, z.B. auch im Schleudergußverfahren herzustellen.

Der Felgenteller kann ebenfalls im Gießverfahren, aber auch durch Schmieden, Pressen usw. hergestellt werden, wobei lediglich auf die Einhaltung der für einen guten Pressitz notwendigen Toleranzen zu achten ist.

Wie ebenfalls schon ausgeführt, kann der Pressitz in einfacher Weise durch Aufschrumpfen des Felgenringes in an sich bekannter Weise erfolgen. Es ist aber auch, insbesondere bei Verwendung eines entsprechend elastischen Materials für den Felgenteller selbst, möglich, diesen beim Einsetzen elastisch so zu verformen, daß er nach dem Einsetzen in dem Felgenring fest verspannt ist.

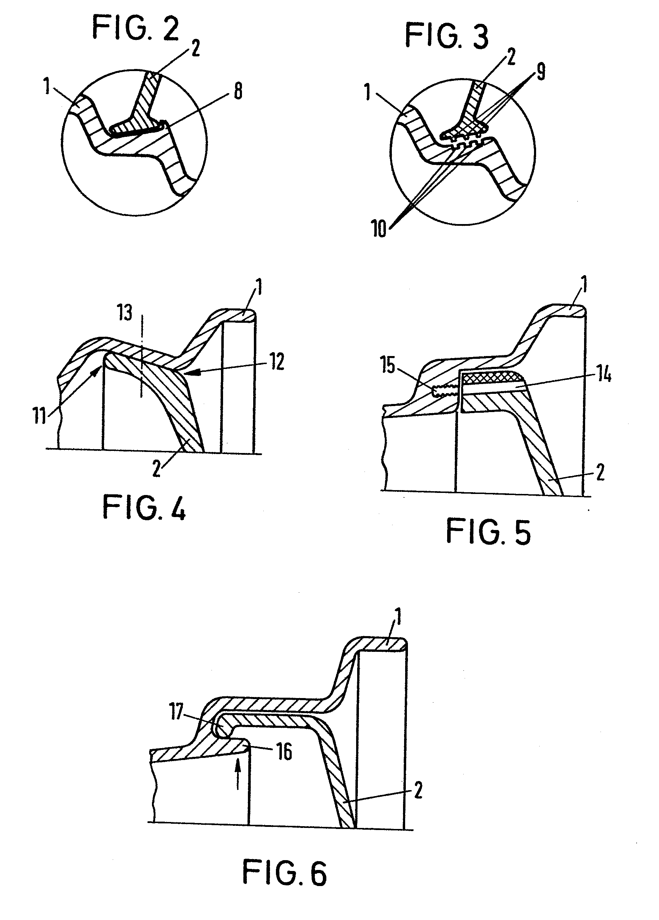

Die Fig. 2 zeigt, daß es im Rahmen der Erfindung, insbesondere bei Fahrzeugfelgen, die hohen achsparallelen Kräften ausgesetzt sind, vorteilhaft sein kann, im Bereich der Verbindung zwischen Felgenring 1 und Felgenteller 2 eine Hinterschneidung 8 vorzusehen, hinter die beim Einsetzen, also beispielsweise beim Aufschrumpfen, der Felgenteller 2 plaziert wird, wodurch außer der durch den Pressitz hervorgerufenen guten Verbindung zusätzliche Kräfte aufgenommen werden.

In der Fig. 3 ist in einem Ausschnitt eine weitere Variante dargestellt, wobei der Felgenteller 2 auf seinem Umfang eine Mehrzahl sich zumindest über einen Teil des Umfanges, vorzugsweise aber über den gesamten Umfang erstreckende Stege 9 aufweist, die in entsprechende Ringnuten, die sich ebenfalls über die gesamte Innenseite des Felgenringes erstrecken können, eingreifen. Dadurch werden nach dem Einsetzen des Felgentellers, beispielsweise durch Aufschrumpfen, selbst extreme Belastungen übertragen.

Die Fign. 4 bis 6 zeigen schematisch einige Maßnahmen zur weiteren Sicherung der Verbindung zwischen Felgenteller und Felgenring, insbesondere auch gegen gegenseitiges Verdrehen.

Dies kann beispielsweise, wie in Fig. 4 gezeigt, durch einfache über den Umfang verteilte Punkt- oder Nahtschweißverbindungen geschehen, wobei diese Schweißverbindungen, wie mit dem Pfeil 11 angedeutet an dem Stirnrand oder, wie mit dem Pfeil 12 gezeigt, am rückwärtigen Rand angebracht werden können. Es ist aber durchaus auch möglich und insbesondere bei ausreichender Berührungsbreite zwischen Felgentelleraußenring und dem Innenabsatz des Felgenringes 1 eine Schweißverbindung im Bereich 13 in Form einzelner Schweißpunkte oder aber einer Schweißnaht vorzusehen.

Auch eine Schraubverbindung kommt zusätzlich in Betracht, wie in Fig. 5 gezeigt. Dabei sind im Rand des Felgentellers 2 Bohrungen 14 zur Aufnahme (nicht gezeigter) Schrauben vorgesehen, während in den Felgenring Gewindebüchsen 15 eingegossen sind.

Eine andere zusätzliche Befestigungssicherung zeigt Fig. 6. Dort ist an der Innenseite des Felgenringes 1 im Aufnahmebereich für den in diesem Fall verdickten Rand 17 des Felgentellers 2 eine Ringnase 16 vorgesehen, die somit eine Ringnut bildet, in die der Rand 17 eingeführt wird. Die Nase 16 wird dann umgebördelt, wodurch der Felgenteller unlösbar gehalten ist.

Die vorliegende Erfindung wurde anhand von ganz konkreten Ausführungsbeispielen und Einzelmaßnahmen erläutert. Es ist für den auf dem Sachgebiet tätigen Fachmann ersichtlich, daß die einzelnen Maßnahmen sowohl in Kombination als auch in abgewandelter Form angewendet werden können. Insbesondere ist es für den Fachmann ersichtlich, daß auch zur zusätzlichen Verdrehungssicherung über den Umfang verteilt achsparallel verlaufende Überhöhungen (Stege) und Vertiefungen (Nuten) angebracht werden können.

Dabei wurde schon darauf hingewiesen, daß im Berührungsbereich zwischen Felgenring und Felgenteller zusätzliches, die Reibung zwischen beiden Teilen erhöhendes, vorzugsweise körniges Material eingebracht werden kann. Es ist aber auch möglich, in diesem Bereich einen entsprechend hitzebeständigen Klebelack oder dgl. einzubringen, der die Verbindung zwischen beiden Teilen entsprechend verbessert.

<u>P a t e n t a n s p r ü c h e</u>

1. Fahrzeugfelge, insbesondere aus leichtem Material, (Leichtmetall), bestehend aus einem Felgenring (1) und einem Felgenteller (2), wobei der Felgenring auf den Felgenteller im Preßsitz, vorzugsweise durch Aufschrumpfen aufgezogen ist, dadurch gekennzeichnet, daß der Felgenring im Bereich des äußeren Felgenhorns (3) mit einer sich nach innen kegelförmig geringfügig erweiternden Ringfläche (4) versehen ist zur Aufnahme des mit einer entsprechend konisch geformten Stirnfläche (5) versehenen Felgentellers.

2. Fahrzeugfelge, insbesondere aus einem leichten Material (Leichtmetall) bestehend aus einem Felgenring (1) und einem Felgenteller (2), wobei der Felgenring auf den Felgenteller im Preßsitz, vorzugsweise durch Aufschrumpfen, aufgezogen ist, dadurch gekennzeichnet, daß der Felgenring im Bereich des äußeren Felgenhorns (3) eine Hinterschneidung (8) aufweist, hinter die der entsprechende Rand des Felgentellers (2) nach entsprechender Verformung beispielsweise durch Erhitzen, eingesetzt ist.

3. Fahrzeugfelge nach Anspruch 1 oder 2, dadurch gekennzeichnet, daß die einander zugewandten Flächen von Felgenring (1) und Felgenteller (2) in gegenseitigem Formschluß uneben gehalten sind.

4. Fahrzeugfelge nach Anspruch 1 oder 2, dadurch gekennzeichnet, daß zwischen den einander zugewandten Flächen von Felgenring (1) und Felgenteller (2) ein körniges Material, z.B. Korunt, eingebracht ist.

5. Fahrzeugfelge nach Anspruch 1 oder 2, dadurch gekennzeichnet, daß Felgenring (1) und Felgenteller (2) zumindest auf den Umfang verteilt an einzelnen gleichmäßig verteilten Stellen miteinander verschweißt sind.

6. Fahrzeugfelge nach Anspruch 1 oder 2, dadurch gekennzeichnet, daß Felgenring (1) und Felgenteller (2) mittels mindestens einer Schraubverbindung zusätzlich gesichert sind.

7. Fahrzeugfelge nach Anspruch 1 oder 2, dadurch gekennzeichnet, daß der Felgenring (1) in dem Aufnahmebereich für den Felgenteller (2) eine in diesem Bereich eine Ringtasche bildende Ringnase (16) aufweist und daß der Felgenteller im Bereich dieser Ringtasche mit einer Verstärkung (17) ausgerüstet ist, um die die Ringnase nach Einsetzen des Felgentellers umgebördelt wird.

# FIG. 1

FIG. 2

FIG. 3

FIG. 4

FIG. 5

FIG. 6